# EUROPÄISCHE PATENTSCHRIFT

(11) **EP 2 973 954 B1**
(45) Veröffentlichungstag und Bekanntmachung des Hinweises auf die Patenterteilung: **13.04.2022**
(21) Anmeldenummer: 14702823.7
(22) Anmeldetag: 03.02.2014
(51) Int. Cl.: H02K 1/27

(54) **ANTRIEB FÜR EINE TRANSPORTVORRICHTUNG, SATZ VON ANTRIEBEN UND VERFAHREN ZUM ANTREIBEN EINER TRANSPORTVORRICHTUNG**
DRIVE FOR A TRANSPORT DEVICE, SET OF DRIVES AND METHOD FOR DRIVING A TRANSPORT DEVICE
UNITÉ D'ENTRAÎNEMENT D'UN DISPOSITIF DE TRANSPORT, ENSEMBLE D'UNITÉS D'ENTRAÎNEMENT, ET PROCÉDÉ D'ENTRAÎNEMENT D'UN DISPOSITIF DE TRANSPORT

(30) Priorität: 14.03.2013 DE 102013204436
(43) Veröffentlichungstag der Anmeldung: 20.01.2016
(73) Patentinhaber: Krones AG, 93073 Neutraubling (DE)
(72) Erfinder: LAUTENSCHLAGER, Franz, 93073 Neutraubling (DE); DAVIDSON, Hartmut, 93073 Neutraubling (DE); HÜTTNER, Johann, 93073 Neutraubling (DE); SEGER, Martin, 93073 Neutraubling (DE); KAHL, Reiner, 93073 Neutraubling (DE); VIERHEILIG, Johannes, 93073 Neutraubling (DE)
(74) Vertreter: Grünecker Patent- und Rechtsanwälte PartG mbB
(86) Internationale Anmeldenummer: PCT/EP2014/052025
(87) Internationale Veröffentlichungsnummer: WO 2014/139727

(56) Entgegenhaltungen:
- EP-A1- 1 553 683
- WO-A1-2009/059421
- CH-A5- 682 865
- DE-A1- 3 620 363
- DE-A1-102004 030 317
- DE-B3-102006 047 883
- DE-B3-102006 047 883
- DE-U1- 8 513 219
- GB-A- 2 252 137
- GB-A- 2 284 106
- JP-A- 2010 136 596
- JP-A- 2012 171 428
- US-A- 5 621 260
- US-A1- 2011 169 379
- US-A1- 2012 192 409
- US-A1- 2012 194 018
- US-B1- 6 420 805

## Beschreibung

Die vorliegende Erfindung betrifft einen Antrieb für eine Transportvorrichtung, wie beispielsweise ein Transportband, der z.B. in der Getränke- und Lebensmittelindustrie verwendbar ist.

### Stand der Technik

Bekannt ist, dass die Drehmomentenausbeute eines Außenläufer-Motors für eine gegebene Baugröße höher ist als bei einem Innenläufer-Motor, weil die Magnetschubkraft zwischen dem Stator und dem Rotor auf größerem Durchmesser wirkt. Dies ermöglicht eine sehr kompakte Baugröße des Außenläufer-Motors bei trotzdem hohem Nenndrehmoment.

EP 2 338 813 B1 offenbart die Verwendung eines Außenläufer-Motors, dessen Stator an einer stationären Säule lösbar angebracht ist und dessen Rotor ein Sternrad trägt und über den Stator an der Säule abstützt. Der Außenläufer-Motor kann als Direktantrieb baulich in das Sternrad integriert oder an dieses angesetzt sein. Die Säule kann an einem hohlen Grundkörper einen oberseitig vorstehenden Wellenstummel aufweisen, auf dem der Stator fixiert ist. Der Stator kann hohlzylindrisch sein und außen auf den Wellenstummel aufgesteckt und daran fixiert werden.

Die EP 1 751 008 A2 offenbart als Antriebseinheit für einen Drehteller einen zyklisch angetriebenen Außenläufer-Motor. Dessen Rotor ist als Gehäuse ausgebildet, das gleichzeitig den Drehteller bilden kann, und unter Umgehung des Stators mit einem separaten Drehlager auf dem Fördertisch drehbar abgestützt wird. Der Stator enthält Wicklungen und ist auf einem Fördertisch gelagert.

Die DE 10 2008 026 243 A1 offenbart die Verwendung eines Elektromotors als Direktantrieb, wobei der Elektromotor einen Stator und einen Rotor mit einer Drehachse umfasst. Die Drehachse des Rotors ist direkt mit einer Welle einer Rolle verbunden. Der Direktantrieb hat kein Getriebe, so dass keine Ölfüllung notwendig ist.

WO 2007/006324 A1 offenbart die Verwendung eines elektrischen Motors, z.B. eines Torque-Motors, der einen Stator und einen Rotor mit permanent erregten Magneten umfasst und der direkt auf ein Transportband wirkt. Es ist somit kein Getriebe erforderlich, mit deren Hilfe die Antriebsleistung des Motors auf das Transportband übertragen werden kann.

DE 85 13 219 U1 offenbart einen Elektromotor und ein damit gekoppeltes mechanisches Getriebe, wobei für eine kurze und raumsparende Bauweise das mechanische Getriebe im Inneren des Motorgehäuses in einem für die Funktion des Elektromotors nicht benötigten Bauraum angeordnet ist.

US 562 12 60 A offenbart einen Motor mit einem Außenrotor, der mit einem Zahnrad verbunden ist, das auf zwei Lagern befestigt ist, eines auf jeder Seite des Zahnrads. Der Rotor hat eine zusätzliche Lagerung im motorischen Bereich.

### Aufgabe der Erfindung

Der Erfindung liegt die Aufgabe zugrunde einen Antrieb für eine Transportvorrichtung mit hohem Nenndrehmoment zur Verfügung zu stellen, der effektiv einsetzbar ist.

### Lösung

Die Aufgabe wird erfindungsgemäß durch den Antrieb nach Anspruch 1 gelöst. Bevorzugte Ausführungsformen sind in den Unteransprüchen offenbart.

In der folgenden Beschreibung stellen Ausführungsformen, auf die Bezug genommen wird und die nicht in den Schutzumfang der angefügten Patentansprüche fallen, lediglich Beispiele dar, die für das Verständnis der Erfindung nützlich sind.

Der Antrieb für eine Transportvorrichtung, wie ein Transportband, das zum Transportieren von Artikeln, vorzugsweise Behältern oder Vorformlingen, ausgelegt ist, umfasst einen Außenläufer-Motor, umfassend einen Stator und einen Rotor, und ein Getriebe, umfassend eine Welle und ein Eintriebszahnrad, wobei eine doppelte Lagerung der Welle in dem Getriebe vorgesehen ist. Der Rotor ist auf der Welle angeordnet, und die Welle ist durchgehend von dem Eintriebszahnrad in dem Getriebe bis zu dem Rotor ausgebildet. In dem Außenläufer-Motor ist keine Lagerung der Welle vorgesehen. Der Außenläufer-Motor ermöglicht einen Antrieb mit hohem Nenndrehmoment, und mittels des Getriebes kann die Antriebsleistung des Außenläufer-Motors auf das Transportband übertragen werden.

Unter doppelter Lagerung ist hierbei zu verstehen, dass entlang der Längsachse der Welle innerhalb des Getriebes beabstandet zueinander zwei Lager angeordnet sind. Je größer der Abstand der beiden Lager entlang der Längsachse zueinander ist, umso stabiler ist die Lagerung der Welle in dem Getriebe.

Durch die doppelte Lagerung der Welle ist diese stabil genug gelagert, so dass für einen Form- und/oder Kraftschluss mit dem Rotor eine Passfeder, ein Konus und/oder eine Passung ausreichend ist. Im Außenläufer-Motor ist somit keine zusätzliche Lagerung der Welle erforderlich. Allerdings kann eine zusätzliche Lagerung der Welle in dem Außenläufer-Motor vorgesehen sein.

Der Rotor kann lösbar von der Welle ausgeführt sein. Somit ist ein einfacher und schneller Austausch des Rotors bzw. der Welle möglich. Dies ist auch für den modularen Aufbau des Außenläufer-Motors und des Getriebes sinnvoll. Zudem ist nur eine Welle des Getriebes erforderlich, und der Rotor braucht keine zusätzliche Welle aufzuweisen.

Durch die durchgehend, also einteilige, Welle ist eine stabile Möglichkeit gegeben, beim Betrieb des Antriebs eine Kraftübertragung vom Rotor an die Welle und von dort an das Getriebe zu ermöglichen.

Der Außenläufer-Motor und das Getriebe können modular aufgebaut sein. So ist es möglich, ein bereits vorhandenes Getriebe mit einem anderen Außenläufer-Motor zu bestücken. Beispielsweise kann für verschiedene Rotoren unterschiedliches Material für die dauerhaften Magnete verwendet werden. Auch ist es möglich, eine kleinere oder größere Statorhöhe zu verwenden; in diesem Fall muss ein entsprechender Rotor verwendet werden und eventuell muss die Länge der Welle des Getriebes angepasst werden. Für eine Statorhöhe von weniger als 200 mm sind Nenndrehmomente in einem Bereich von 6 Nm bis 12 Nm und Nenndrehzahlen bei einer Nennfrequenz von 100 Hz im Bereich von 2000 bis 3000 Umdrehungen pro Minute vorgesehen.

Vorteilhaft besitzen alle Motorstärken den gleichen Durchmesser und unterscheiden sich nur in der Statorhöhe. Somit ist ein einfaches Tauschen des Außenläufer-Motors unter Beibehalten des Getriebes möglich. Besonders Vorteilhaft liegt der Statordurchmesser im Bereich von 160±30 mm. Die Statorhöhe bei 6±2 Nm beträgt dann ca. 55±20 mm und bei 12±2 Nm ca. 80±20 mm.

Der Stator und der Rotor können in einem Motorgehäuse angeordnet sein. So sind Stator und Rotor gegen Verschmutzungen beispielsweise aus der Umgebung der Transportvorrichtung geschützt.

Das Motorgehäuse kann einen innen liegenden, umlaufenden gummielastischen Ring, vorzugsweise einen O-Ring, umfassen. Dieser Ring sorgt für eine Abdichtung zwischen Motorgehäuse und einer Adapterplatte, auf die der Stator montiert werden kann bzw. zwischen dem Motorgehäuse und dem Getriebegehäuse, wenn keine Adapterplatte vorgesehen ist. So ist das Innere des Motorgehäuses vor Verschmutzungen beispielsweise aus der Umgebung der Transportvorrichtung geschützt.

Der Rotor kann hierbei form- und/oder kraftschlüssig mittels einer Passfeder, einem Konus und/oder einer Passung mit der Welle verbindbar ausgeführt sein. Durch den Form- und/oder Kraftschluss ist beim Betrieb des Antriebs eine Kraftübertragung vom Rotor an die Welle des Getriebes möglich.

Die doppelte Lagerung der Welle kann in dem Getriebe unter Verwendung von Schrägkugellagern (beispielsweise nach DIN 628) vorgesehen sein, so dass beispielsweise Kräfte einer Bremse aufgefangen werden können, und besonders vorzugsweise ist keine Lagerung der Welle in dem Außenläufer-Motor vorgesehen.

Schrägkugellager haben in Richtung ihrer Lagerachse gegeneinander versetzt angeordnete Laufbahnen im Innen- und Außenring. Sie sind insbesondere für Lagerungen geeignet, die Radial- und Axialbelastungen aufnehmen sollen.

Statt der doppelten Lagerung kann auch eine dreifache, vierfache oder mehr als vierfache Lagerung der Welle in dem Getriebe vorgesehen sein, wobei die drei, vier oder mehr Lager entlang der Längsachse zueinander jeweils einen Abstand aufweisen. Diese Abstände können gleich oder verschieden groß sein.

Der Stator kann mittels einer konischen Anlagefläche mittig zu der Welle zentriert sein. Die konischen Anlageflächen bieten eine wartungsunanfällige Möglichkeit, eine Zentrierung des Stators in Bezug auf die Welle zu gewährleisten. Zudem können die konischen Anlageflächen vergleichsweise großflächig ausgeführt werden, so dass die Zentrierung sicher ausgeführt wird.

In einer anderen Ausführungsform kann der Stator mittels einer Zentrierhülse mittig zu der Welle zentriert und dann festgeschraubt werden.

Vorzugsweise weisen Außenseiten des Antriebs keine nach oben weisenden horizontalen Flächen auf. Auf horizontalen Flächen, die nach oben weisen, könnten sich Schmutzpartikel, Flüssigkeiten oder dergleichen anlagern, was aber gegen Hygienebestrebungen verstoßen würde. Die nach oben weisenden Flächen können dachförmig ausgeformt sind, so dass es zu keinen Ablagerungen auf diesen Flächen kommen kann.

Der Rotor kann einen Eisenring tragen, der einen Magnetschluss bildet, wobei vorzugsweise der Eisenring ein Blechpaket ist und/oder in Kunststoff eingefasst ist. Durch den Eisenring ist eine stabile Bauweise des Rotors gegeben, und zudem kann der Eisenring als Aufnahme für die Dauermagnete dienen, so dass keine zusätzliche Anbringmöglichkeit für die Dauermagnete vorgesehen werden muss. Der Eisenring ist so ausgebildet, dass er (als ein Joch) einen Magnetschluss zwischen benachbarten Dauermagneten bzw. deren Aufnahmen herstellt.

Die Dauermagnete können in das Blechpaket oder in den Kunststoff formschlüssig eingeschoben und gesichert, vorzugsweise durch kleben und/oder einrasten, sein. Die Dauermagnete sind hierbei in dem Eisenring so angeordnet, dass nebeneinander liegende Dauermagnete abwechselnd mit dem Nordpol bzw. dem Südpol nach außen in Richtung des Motorgehäuses weisen. Durch Wechselwirkung der Dauermagnete mit dem Eisenring und insgesamt mit den Motorspulen des Stators kommt es zu einem Antrieb des Rotors und somit der Welle, die die Antriebskraft an das Getriebe überträgt.

Die Dauermagnete können aus Hartferrit, und/oder Seltene-Erden-Magnete wie beispielsweise Neodym-Eisen-Bor und/oder Aluminium-Nickel-Kobalt bestehen.

Zwischen dem Getriebe und dem Außenläufer-Motor kann eine Adapterplatte vorgesehen sein, wobei die Adapterplatte einen Adapterplatten-Wellendichtring umfasst. Der Adapterplatten-Wellendichtring kann den Außenläufer-Motor vor eventuell austretendem Öl des Getriebes schützen. Da die Welle sich vom Getriebe aus durch die Adapterplatte bis in den Stator und den Rotor erstreckt, ist diese Abdichtung des Außenläufer-Motors gegenüber dem Getriebe sinnvoll, um Schäden an dem Außenläufer-Motor durch eindringendes Öl aus einem (undichten) Getriebe zu schützen. Es kann auch vorgesehen sein, dass die Adapaterplatte mehr als einen Adapterplatten-Wellendichtring umfasst.

Das Getriebe kann an einer Seite, die dem Außenläufer-Motor zugewandt ist, offen sein. In diesem Fall ist es sinnvoll, wenn die Adapterplatte mindestens zwei Adapterplatten-Wellendichtringe umfasst, die einen gewissen Abstand zueinander aufweisen. In einem Leerraum zwischen dem Adapterplatten-Wellendichtring, der am nächsten zu dem Getriebe liegt und einem benachbarten Adapterplatten-Wellendichtring, der weiter entfernt von dem Getriebe liegt, kann aus dem Getriebe austretendes Öl gelangen, ohne dass der Außenläufer-Motor unmittelbar geschädigt wird. Es kann vorgesehen sein, dass die Adapterplatte eine Bohrung aufweist, die von dem Leerraum zwischen den beiden Adapterplatten-Wellendichtringen nach unten (geneigt) zu einem Außenbereich der Adapterplatte führt. Durch die Bohrung kann Öl, das in den Leerraum eintritt, mittels der Bohrung nach außen geführt werden. Bei Austritt von Öl aus der Bohrung kann somit auf eine Undichtigkeit des Adapterplatten-Wellendichtrings, der am nächsten zu dem Getriebe liegt, rückgeschlossen werden.

In einer anderen Ausführungsform kann das Getriebe geschlossen und ein Getriebe-Wellendichtring vorgesehen sein, um die Welle abzudichten. Durch den Getriebewellendichtring kann kein Öl des Getriebes nach außen dringen, so dass es zu keiner Verunreinigung der Umgebung kommt und so dass das Getriebe aufgrund fehlenden Öls Schaden nimmt.

Ein Gewindeeinsatz kann den Getriebe-Wellendichtring fixieren. Dadurch ist sichergestellt, dass der Getriebe-Wellendichtring nicht verschoben wird und somit effektiv wirken kann.

Der Getriebe-Wellendichtring kann vorteilhaft auf einer gehärteten Hülse laufen, die auf die Welle aufgebracht ist, z.B. aufgeschrumpft ist. Durch diese Anordnung kann die Welle vor einem Einfluss des Getriebe-Wellendichtrings geschützt werden, da dieser auf die gehärtete Hülse einwirkt und somit Abnutzungserscheinungen auf der Welle selbst unterbunden werden.

Vorzugsweise weist das Getriebe keine Entlüftungsschraube auf.

Das Getriebe kann mit einer, zwei oder drei oder mehr als drei Übersetzungsstufen bzw. Untersetzungsstufen ausgebildet sein. Durch verschiedene Übersetzungsstufen kann die Kraftübertragung des Antriebs an die Transportvorrichtung optimal gesteuert bzw. gewählt werden. Es können Getriebe mit einem Ausgangsdrehmoment (Nenndrehmoment) von 300±100 Nm und/oder 600±200 Nm vorgesehen sein. Dabei sind vorteilhaft diese beiden Getriebegrößen mit gleichen Anschlussmaßen versehen, und werden je nach Bedarf an die unterschiedlich starken Außenläufer-Motoren angebaut.

Eine Übersetzungsstufe bzw. Untersetzungsstufe kann durch eine Wechselwirkung von Stirnrad zu Stirnrad, Kegelrad zu Stirnrad oder durch ein Planetengetriebe realisiert werden.

Das Getriebe kann abgangsseitig eine Hohlwelle umfassen, die vorzugsweise aus Edelstahl besteht und/oder eine Oberflächenvergütung, wie beispielsweise eine QPQ-Nitrierung, aufweist. Mittels der Hohlwelle kann bei einem Betrieb des Antriebs eine Kraftübertragung erfolgen.

Das Getriebe kann dazu ausgelegt sein, in vier Ausrichtungen in Bezug auf die Adapterplatte ausgerichtet und mit der Adapterplatte verbunden zu werden. So ist es möglich, das Getriebe so anzuordnen, dass die Hohlwelle nach oben oder unten weist oder dass die Hohlwelle nach rechts oder links ausgerichtet ist.

Die Adapterplatte kann zudem eine Bohrung aufweisen, die von einem Bereich zwischen dem Adapterplatten-Wellendichtring und dem Getriebe-Wellendichtring, wobei sich der Bereich ergibt, wenn die Adapterplatte und das Getriebe (formschlüssig) miteinander verbunden sind, nach unten (geneigt) zu einem Außenbereich der Adapterplatte führt.

Durch die Bohrung kann Öl, das in den Leerraum eintritt - z.B. durch eine undichte Getriebe-Wellendichtung - mittels der Bohrung nach außen geführt werden. Bei Austritt von Öl aus der Bohrung kann somit auf eine undichte Getriebe-Wellendichtung rückgeschlossen werden.

Die Bohrung kann in dem Außenbereich der Adapterplatte zudem ein Schauglas aufweisen. Wird austretendes Öl in dem Schauglas aufgefangen, so wird eine Abgabe des Öls an die Peripherie unterbunden, jedoch kann eine Leckage einer Wellendichtung erkannt werden.

Die Adapterplatte kann zudem mindestens einen Durchlass für elektrische Anschlussleitungen umfassen. In diesem Durchlass können beispielsweise die elektrischen Leitungen für die Motorspulen und/oder die Bremse verlaufen, so dass die Anschlussleitungen nicht außerhalb des Außenläufer-Motors angeordnet werden müssen. Nach dem Durchführen der Leitungen wird der Durchlass vorteilhaft wieder verschlossen, mögliche Varianten sind ein Vergießen mit Harz oder das Ausspritzen auf Silikon-Basis.

Die Adapterplatte kann ein externes Klemmbrett umfassen, mittels dem eine Kontaktierung von Motorspulen erfolgen kann. Das externe Klemmbrett sorgt für einen stabilen und sicheren Anschluss der elektrischen Anschlussleitungen der Motorspulen und somit für eine stabile und sichere Kontaktierung der Motorspulen. Das externe Klemmbrett ist vorzugsweise an einer nach unten weisenden Seite des Antriebs vorgesehen.

Der Antrieb kann weiter eine Bremse umfassen, die in Verlängerung des Rotors samt der Welle angeordnet ist. Der Stillstand des Antriebs kann somit effektiv kontrolliert werden, da die Bremse bei Stillstand des Antriebs bremst bzw. blockiert. Durch das Bremsen bzw. Blockieren der Bremse bei Stillstand des Antriebs können beispielsweise ungewünschte Bewegungen der Transportvorrichtung unterbunden werden. Bei Betrieb des Antriebs wird die bremsende bzw. blockierende Wirkung der Bremse aufgehoben.

Die Bremse kann modular aufgebaut und vorzugsweise in einem Deckel des MotorGehäuses angeordnet sein. Somit ist es möglich, eine Bremse zu einem bereits bestehenden Außenläufer-Motor ohne Bremse hinzuzufügen. Die Anordnung der Bremse in dem Deckel des Motorgehäuses erlaubt zudem ein leichtes und sicheres Anordnen der Bremse an dem Außenläufer-Motor und dem Motorgehäuse.

Die Bremse kann in dem Deckel befestigt sein, wobei der Deckel als Drehmomentabstützung der Bremse dient. Die Befestigung der Bremse in dem Deckel des Motorgehäuses erlaubt ein leichtes und sicheres Anordnen der Bremse an dem Außenläufer-Motor und dem Motorgehäuse. Dadurch, dass der Deckel als Drehmomentabstützung der Bremse dient, wirken keine störenden bzw. schädlichen Drehmomente auf den Außenläufer-Motor bzw. das Getriebe.

Die Bremse kann eine Bremsscheibe umfassen, die an einer verlängerten Welle oder an einer Rotorglocke angeordnet ist. Die Bremsscheibe kann beispielsweise beidseitig mit Bremsbelägen wechselwirken, so dass die Bremse bremst. Die Bremsscheibe ist bei Verschleiß leicht gegen eine neue Bremsscheibe austauschbar.

In einer anderen Ausführungsform kann eine Rotorglocke eine Bremsoberfläche umfassen. Wenn die Rotorglocke eine Bremsoberfläche aufweist, ist es nicht erforderlich, eine zusätzliche Bremsscheibe vorzusehen.

Der Deckel kann Anschlussleitungen für eine Bremsspule umfassen, die vorzugsweise so ausgeführt sind, dass wenn der Deckel und das Motorgehäuse formschlüssig miteinander verbunden sind, eine Kontaktierung stattfindet. So müssen die Anschlussleitungen nicht außerhalb des Deckels geführt werden. Durch die automatische Kontaktierung bei formschlüssigem Verbinden von Deckel und Motorgehäuse ist zudem keine manuelle Kontaktierung beispielsweise durch Verbinden von Anschlussleitungen mit einem Klemmbrett oder dergleichen erforderlich.

Alternativ, anstatt der Bremse, kann der Antrieb weiter eine Rücklaufsperre umfassen.

Weiter umfasst die Erfindung einen Satz von Antrieben gemäß einem der oben oder weiter unten aufgeführten Ausführungsformen des Antriebs, wobei Außenläufer-Motoren unterschiedlicher Größe, umfassend Statoren gleichen Durchmessers und verschiedener Höhe mit entsprechenden Rotoren, und/oder Getriebe mit unterschiedlichen Übersetzungsstufen bzw. Untersetzungsstufen vorgesehen sind. Als die Höhe des Stators ist hierbei die Ausdehnung des Stators entlang der Längsachse einer Aussparung in dem Stator, der die Welle des Getriebes aufnehmen kann, zu verstehen.

Zudem umfasst die Erfindung ein Verfahren zum Antreiben einer Transportvorrichtung, wie ein Transportband, das zum Transportieren von Artikeln, vorzugsweise Behältern oder Vorformlingen, ausgelegt ist, unter Verwendung eines Antriebs wie er weiter oben oder weiter unten beschrieben ist.

### Kurze Figurenbeschreibung

Weitere Vorteile und Ausführungsformen ergeben sich aus den beigefügten Zeichnungen. Darin zeigt:
- Figur 1: eine perspektivische Darstellung der Komponenten eines Antriebs für eine Transportvorrichtung;
- Figur 2: einen schematischen Querschnitt durch einen Antrieb;
- Figur 2a: eine Ausschnittsvergrößerung der Figur 2, den gummielastischen Ring des Motorgehäuses;
- Figur 2b: eine Ausschnittsvergrößerung der Figur 2, die doppelte Lagerung der Welle in dem Getriebe;
- Figur 2c: eine Ausschnittsvergrößerung der Figur 2, den Getriebe-Wellendichtring und den Adapterplatten-Wellendichtring;
- Figur 3: eine schematische Darstellung eines Querschnitts durch einen Außenläufer-Motor;
- Figur 3a: eine Ausschnittsvergrößerung der Figur 3, den Eisenring des Rotors mit den Dauermagneten;
- Figur 4: einen schematischen Querschnitt einer Adapterplatte;
- Figur 4a: eine perspektivische Ansicht der Figur 4;
- Figur 5: eine erste Ausführungsform einer Bremse;
- Figur 5a: eine Ausschnittsvergrößerung der Figur 5;
- Figur 6: eine zweite Ausführungsform einer Bremse;
- Figur 6a: eine Ausschnittsvergrößerung der Figur 6.

### Ausführliche Figurenbeschreibung

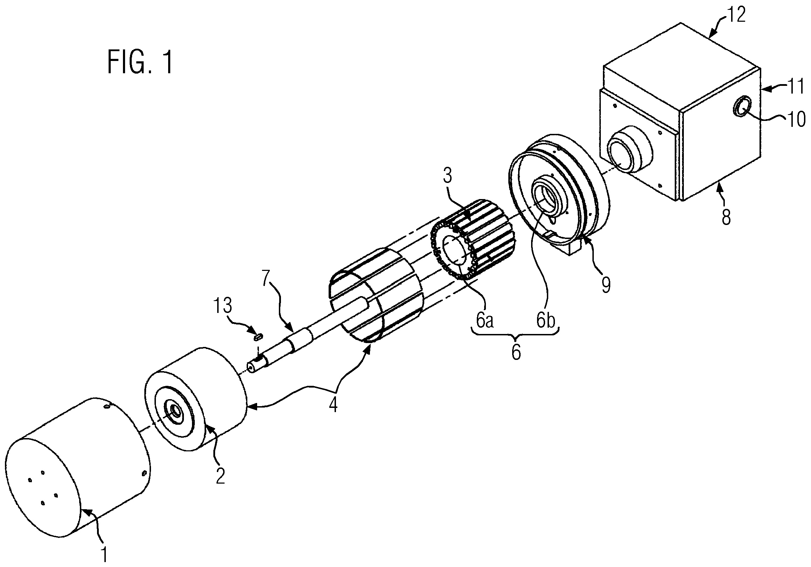

Figur 1 zeigt eine schematische Darstellung der Komponenten eines Antriebs für eine Transportvorrichtung. Zu sehen ist ein Deckel 1, der eine Bremse umfassen kann; die Bremse ist in der Darstellung nicht sichtbar, da sie innerhalb des Deckels 1 angeordnet ist. Der Deckel 1 mit der Bremse ist ein optionales Element des Antriebs. Statt des Deckels 1 kann ein Außenläufer-Motor an dieser Stelle von einem Teil des Motorgehäuses abgedeckt sein. Der Außenläufer-Motor setzt sich aus einem Rotor 2 und einem Stator 3 zusammen. Von dem Rotor 2 ist ein den Rotor 2 umgebenden Eisenring 4 zu sehen, an dessen Innenseite - nicht sichtbar die dauerhaften Magnete angeordnet sind. Bei dem Stator 3 sind die Motorspulen 5 zu erkennen, die mit den Magneten des Rotors 2 wechselwirken. Weiter ist eine Aussparung 6 dargestellt, die eine Aussparung 6a in dem Stator 3 und eine Aussparung 6b in der Adapterplatte 9 umfasst, wobei die Aussparung 6 eine Welle 7 eines Getriebes 8 aufnehmen kann. Zwischen dem Getriebe 8 und dem Außenläufer-Motor ist eine Adapterplatte 9 vorgesehen, auf die in Figur 1 der Stator 3 montiert ist. Das Getriebe 8 umfasst die Welle 7, die durch den Stator 3 und bis zu dem Rotor 2 reicht, wenn die Komponenten des Antriebs formschlüssig zusammengesetzt sind.

Das Getriebe 8 weist zudem abgangsseitig eine Hohlwelle 10 auf. Das Getriebe 8 ist dazu ausgelegt, dass es in vier verschiedenen Anordnungen auf der Adapterplatte 9 angeordnet werden kann. In der Figur 1 dargestellten Anordnung weist die Hohlwelle 10 nach vorne in die Bildebene. Wird das Getriebe 8 mit Blickrichtung entlang der Welle 7 auf das freie Ende der Welle zu im Uhrzeigersinn um 90° gedreht, so weist die Hohlwelle 10 nach oben, bei einer weiteren Drehung im Uhrzeigersinn um 90° weist die Hohlwelle 10 nach hinten und bei einer weiteren Drehung im Uhrzeigersinn um 90° weist die Hohlwelle 10 nach unten.

Das Getriebegehäuse 11 ist vorzugsweise so geformt, dass die nach oben weisenden Oberflächen 12 des Getriebegehäuses 11 keine horizontalen Flächen aufweisen, sondern die nach oben weisenden Flächen dachförmig ausgeformt sind, so dass es zu keinen Ablagerungen oder Flüssigkeitsansammlungen (Pfützen) auf den nach oben weisenden Flächen kommen kann.

Die Welle 7 des Getriebes 8 weist an ihrem freien Ende, d.h. an dem Ende, das nicht unmittelbar mit dem Getriebe verbunden ist, eine Passfeder 13 auf, die mit einer entsprechenden Nut des Rotors 2 formschlüssig wechselwirken kann.

Die Figur 1 macht den modularen Aufbau des Antriebs deutlich, der einen einfachen Austausch von Elementen ermöglicht. Beispielsweise ist vorgesehen, dass der Stator 3 für verschiedene Größen des Außenläufer-Motors jeweils den gleichen Durchmesser aufweist und sich nur durch die Höhe unterscheidet. Als die Höhe ist hierbei die Ausdehnung des Stators 3 entlang der Längsachse der Aussparung 6a zu verstehen. Zudem kann das Material der Magneten in dem Rotor 2 für verschiedene Außenläufer-Motoren unterschiedlich gewählt werden.

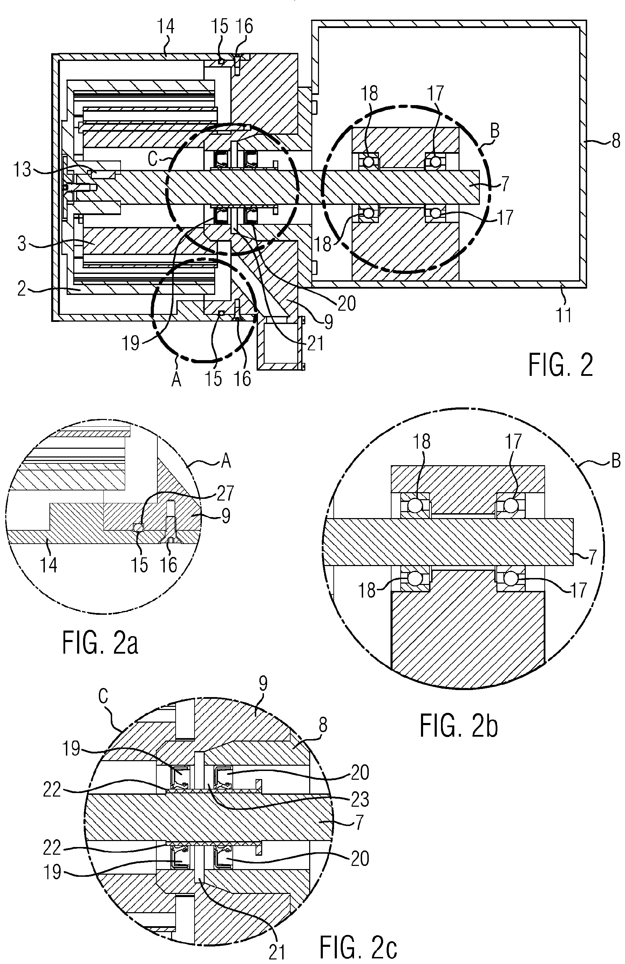

Figur 2 zeigt einen schematischen Querschnitt durch einen Antrieb, der ein geschlossenes Getriebe 8 mit einer Welle 7, eine Adapterplatte 9 mit darauf montiertem Stator 3 und einen Rotor 2 umfasst, wobei der Außenläufer-Motor in einem Motorgehäuse 14 untergebracht ist.

Die Figuren 2a, 2b und 2c zeigen Ausschnittsvergrößerungen der Figur 2, in denen die Anordnung des gummielastischen Rings 15 des Motorgehäuses 14, die doppelte Lagerung 17, 18 der Welle 7 in dem Getriebe 8 und die Anordnung von Adapterplatten-Wellendichtring 19 und Getriebe-Wellendichtring 20 vergrößert dargestellt sind.

Das Motorgehäuse 14, das den Rotor 2 und den Stator 3 an einer Stirnseite und der Mantelseite umgibt besitzt einen innen liegenden, umlaufenden gummielastischen Ring 15. Dieser Ring 15 sorgt für eine Abdichtung zwischen dem Motorgehäuse 14 und der Adapterplatte 9, die bei Montage des Stators 3 auf der Adapterplatte 9 auf der Innenfläche des Motorgehäuses 14 teilweise aufliegt. Die Adapterplatte 9 weist eine umlaufende Nut 27 auf, die dazu ausgelegt ist, den gummielastischen Ring 15 des Motorgehäuses 15 aufzunehmen. Zudem werden das Motorgehäuse 14 und die Adapterplatte 9 mittels Schrauben 16 verschraubt, um einen stabilen Zusammenhalt zu gewährleisten, der auch das Eindringen von Partikeln und dergleichen aus der Umgebung verhindert.

Die Welle 7 ist in dem Getriebe 8 in einer doppelten Lagerung 17, 18 gelagert, so dass in dem Außenläufer-Motor keine zusätzliche Lagerung der Welle 7 erforderlich ist. Es ist ausreichend, wenn die Welle 7 beispielsweise mittels der Passfeder 13 form- und/oder kraftschlüssig mit der entsprechenden Nut des Rotors 2 fixiert wird. Wie dargestellt kann die Lagerung mittels Schrägkugellagern 17, 18 erfolgen, so dass beispielsweise Kräfte einer Bremse aufgefangen werden können. Wie dargestellt, ist unter der doppelten Lagerung der Welle 7 zu verstehen, dass entlang der Längsachse der Welle 7 innerhalb des Getriebes 8 beabstandet zueinander zwei Lager angeordnet sind.

Die Adapterplatte 9 weist einen Adapterplatten-Wellendichtring 19 auf, der um einen Bereich der Aussparung 6b herum angeordnet ist, um den Außenläufer-Motor vor eventuell austretendem Öl des Getriebes 8 zu schützen. Da die Welle 7 sich vom Getriebe 8 aus durch die Adapterplatte 9 bis in den Stator 3 und den Rotor 2 erstreckt, ist diese Abdichtung des Außenläufer-Motors gegenüber dem Getriebe 8 sinnvoll, um Schäden an dem Außenläufer-Motor durch eindringendes Öl aus einem undichten Getriebe zu schützen. Das Getriebe 8 weist einen Getriebe-Wellendichtring 20 auf, um die Welle 7 im Bereich des Austritts aus dem Getriebegehäuse 11 abzudichten. Zwischen dem Adapterplatten-Wellendichtring 19 und dem Getriebe-Wellendichtring 20 befindet sich ein Leerraum 21. Durch die Adapterplatte 9 hindurch ist eine Bohrung ausgeführt, die in diesem Leerraum 21 endet und nach unten ausgerichtet ist, so dass Öl, das in den Leerraum 21 eintritt - z.B. durch eine undichte Getriebe-Wellendichtung 20 - mittels der Bohrung nach außen geführt werden kann. Bei Austritt von Öl aus der Bohrung kann somit auf eine undichte Getriebe-Wellendichtung 20 rückgeschlossen werden. Am äußeren Ende der Bohrung kann auch ein Schauglas (nicht dargestellt) vorgesehen sein, in dem austretendes Öl aufgefangen wird. So wird eine Abgabe des Öls an die Peripherie unterbunden, eine Leckage von Öl jedoch erkennbar.

Der Getriebe-Wellendichtring 20 läuft auf einer gehärteten Hülse 22, die auf die Welle 7 z.B. aufgeschrumpft ist. Zudem wird der Getriebe-Wellendichtring 20 mittels eines Gewindeeinsatzes 23 zentriert. Bei Verschleiß der gehärteten Hülse 22 braucht diese nur ausgewechselt zu werden, während ein Austausch der Welle 7 nicht erforderlich ist.

Die Adapterplatte 9 und das Getriebegehäuse 11 weisen jeweils konische Anlageflächen auf, die so zusammenwirken, dass Adapterplatte 9 und das Getriebegehäuse 11 formschlüssig zusammenpassen und zudem eine Zentrierung der Welle 7 in der Aussparung 6b Adapterplatte 9 erfolgt. Zudem läuft auch der Adapterplatten-Wellendichtring 19 auf der gehärteten Hülse 22 der Welle 7, wenn die Welle 7 durch den Bereich der Aussparung 6b in der Adapterplatte 9 geschoben ist.

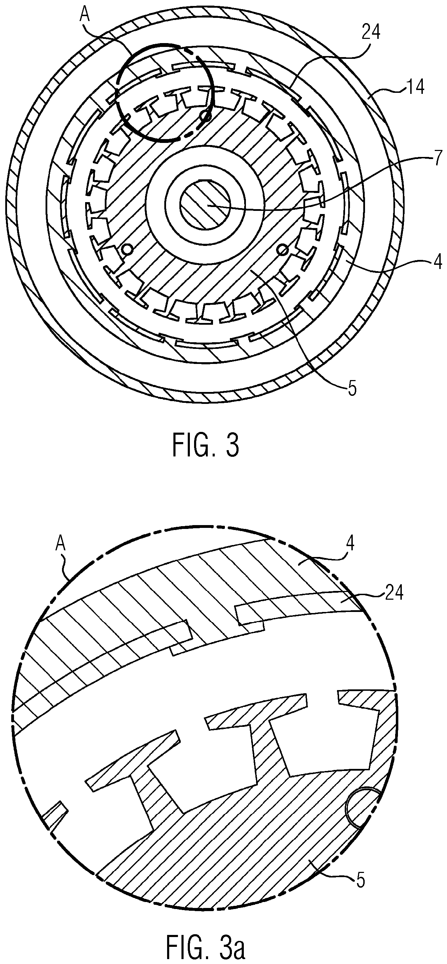

Figur 3 zeigt einen Querschnitt durch den Außenläufer-Motor, wobei das Motorgehäuse 14, der Rotor 2, der Stator 3 und die Welle 7 dargestellt sind. Der Rotor 2 trägt den Eisenring 4, der einen Magnetschluss bildet. Der Eisenring 4 ist ein Blechpaket und/oder ist in Kunststoff eingebettet, so dass der Eisenring 4 im gezeigten Fall zwölf Aussparungen aufweist, in welche entsprechen zwölf Dauermagnete 24 eingebracht werden können. Figur 3a zeigt eine Ausschnittsvergrößerung der Figur 3, in welcher die Dauermagnete 24 in dem Eisenring 4 genauer zu sehen sind. Diese Dauermagnete 24 sind hierbei in dem Eisenring 4 so angeordnet, dass nebeneinander liegende Dauermagnete 24 abwechselnd mit dem Nordpol bzw. dem Südpol nach außen in Richtung des Motorgehäuses 14 weisen. Durch Wechselwirkung der Dauermagnete 24 mit dem Eisenring 4 und insgesamt mit den Motorspulen 5 des Stators 3 kommt es zu einem Antrieb des Rotors 2 und somit der Welle 7, die die Antriebskraft an das Getriebe 8 überträgt.

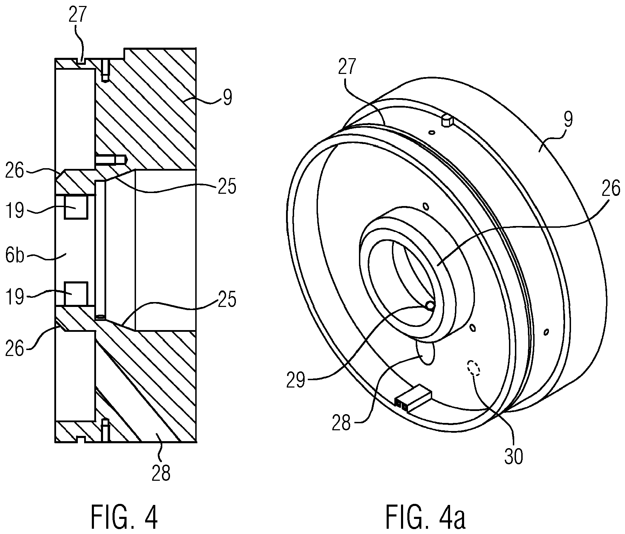

Figur 4 zeigt einen Querschnitt durch eine Adapterplatte 9. Zu erkennen sind die konischen Anlageflächen 25 im Innern der Aussparung 6b, die so mit entsprechenden konischen Anlageflächen des Getriebegehäuses 11 zusammenwirken, dass die Adapterplatte 9 und das Getriebegehäuse 11 formschlüssig zusammenpassen und zudem eine Zentrierung der Welle 7 in der Aussparung 6b der Adapterplatte 9 erfolgt. Die Adapterplatte 9 weist einen Adapterplatten-Wellendichtring 19 auf, der um einen Bereich der Aussparung 6b herum angeordnet ist, um den Außenläufer-Motor vor eventuell austretendem Öl des Getriebes 8 zu schützen.

Weitere konische Anlageflächen 26 sind dargestellt, die so mit entsprechenden konischen Anlageflächen des Stators 3 zusammenwirken, dass die Adapterplatte 9 und der Stator 3 formschlüssig zusammenpassen.

Um den gummielastischen Ring 15 des Motorgehäuses 14 aufnehmen zu können, weist die Adapterplatte 9 eine umlaufende Nut 27 auf.

Die Adapterplatte 9 weist einen Durchlass 28 auf, in dem beispielsweise elektrische Leitungen untergebracht werden können, z. B. für die Motorspulen 5.

Das erste Ende 29 der durchgehenden Bohrung in der Adapterplatte 9 ist in dem Leeraum 21 zwischen dem Adapterplatten-Wellendichtring 19 und dem Getriebe-Wellendichtring 20 angeordnet ist. Die Bohrung ist (schräg) nach unten gerichtet ist, so dass Öl, das in den Leerraum 21 eintritt mittels der Bohrung über das zweite Ende 30 der Bohrung nach außen geführt werden kann; in Figur 4a sind das erste Ende 29 und das zweite Ende 30 (gestrichelt) dargestellt.

Figur 4a zeigt eine perspektivische Ansicht der Figur 4, in welcher der Adapterplatten-Wellendichtring nicht dargestellt ist. In dieser Figur 4a ist zudem das eine Ende des Durchlasses 28 für elektrische Leitungen dargestellt.

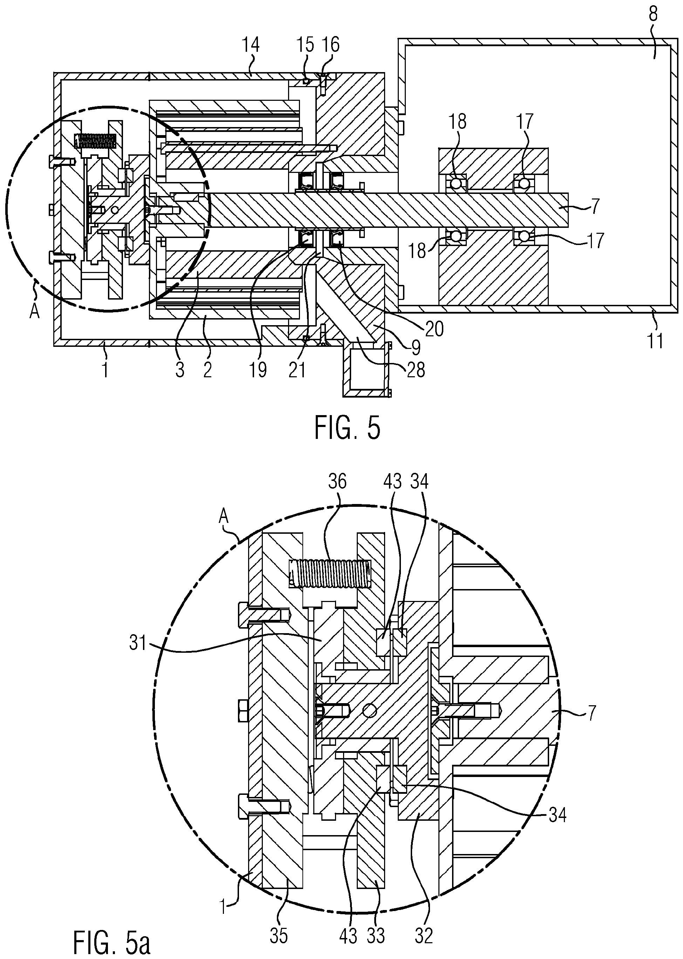

Figur 5 zeigt eine erste Ausführungsform einer Bremse, und Figur 5a zeigt eine Ausschnittsvergrößerung der Figur 5. Die Bremsscheibe 31 ist hierbei separat ausgeführt, auf einer Wellenverlängerung 32 angeordnet und schwimmend gelagert. Zudem sind an der Wellenverlängerung 32 und einem ersten Teil 33 der Bremse jeweils ein Magnet 34, 43 so angeordnet, dass die beiden Magnete 34, 43 einander gegenüber liegen.

Bei dem Magnet 34 in der Wellenlängenverlängerung 32 kann es sich um einen Dauermagneten und bei dem Magnet 43 in dem ersten Teil 33 der Bremse um einen Elektromagneten handeln. Es ist auch möglich, dass der Magnet 34 in der Wellenlängenverlängerung 32 ein Elektromagnet ist und der Magnet 43 in dem ersten Teil 33 der Bremse ein Dauermagnet ist. Auch kann sowohl der Magnet 34 in der Wellenlängenverlängerung 32 wie der Magnet 43 in dem ersten Teil 33 der Bremse ein Elektromagnet sein.

Zwischen einem zweiten Teil 35 der Bremse, der an dem Deckel 1 angeordnet ist und der an seiner Oberfläche einen Bremsbelag aufweist und dem ersten Teil 33, der an einer der Bremsscheibe 31 zugewandten Oberfläche einen Bremsbelag aufweist, ist die Bremsscheibe 31 angeordnet. Der erste Teil 33 und der zweite Teil 35 sind über eine Feder 36 verbunden, so dass der Abstand zwischen dem ersten Teil 33 und dem zweiten Teil 35 mittels der Feder 36 in Zusammenarbeit mit den Magneten 34, 43 verkleinert bzw. vergrößert oder gleich gehalten werden kann. Durch eine angelegte elektrische Spannung wirkt der Elektromagnet 34, 43 auf den Dauermagneten 43, 34 bzw. die Elektromagnete 34, 43 aufeinander, so dass sie sich anziehen, die Feder 36 als Folge davon gedehnt wird, wodurch die Bremsbeläge des ersten Teils 33 und des zweiten Teils 35 jeweils einen Abstand von der Bremsscheibe 31 aufweisen und somit die Bremse keine bremsende bzw. blockierende Wirkung aufweist. Wird die angelegte elektrische Spannung wieder weggenommen - beispielsweise bei einem Stillstand des Antriebs oder bei einem allgemeinen Stromausfall - so stoßen sich die Magnete 34, 43 ab und die gedehnte Feder 36 kann sich zusammenziehen, so dass die Bremsbeläge des ersten Teils 33 und des zweiten Teils 35 der Bremsscheibe 31 in Kontakt kommen und wechselwirken und so die Bremse bremst bzw. blockiert.

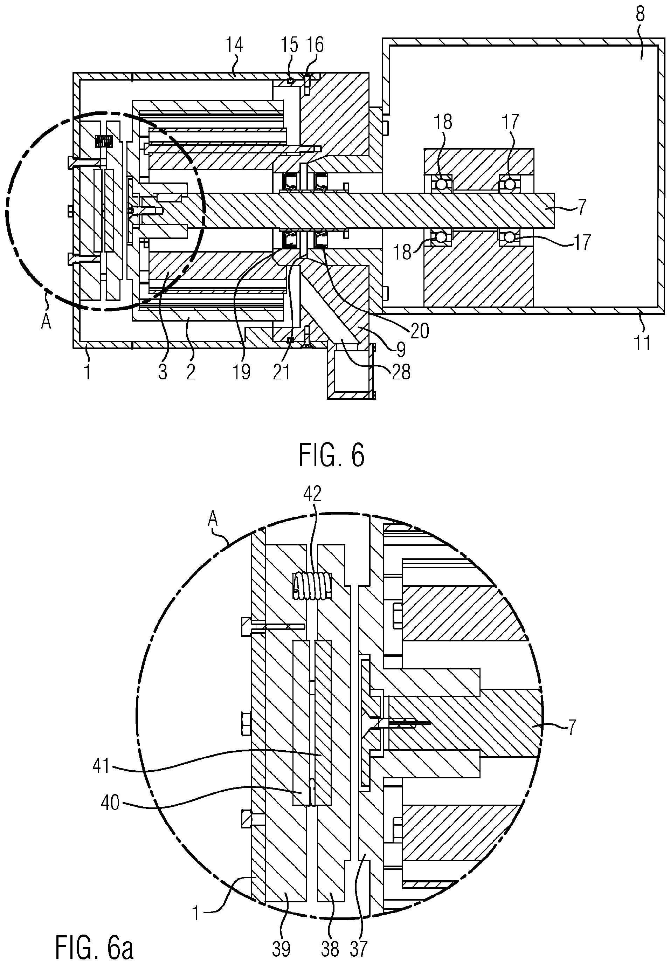

Figur 6 zeigt eine zweite Ausführungsform einer Bremse. Hierbei weist eine Rotorglocke 37 einen Bremsbelag auf, der mit einem Bremsbelag eines ersten Teils 38 der Bremse zusammenwirkt. Zwischen dem ersten Teil 38 der Bremse und einem zweiten Teil 39 der Bremse, der an dem Deckel 1 angeordnet ist, sind Magnete 40, 41 angeordnet, und der erste Teil 38 und der zweite Teil 39 sind durch eine Feder 42 verbunden.

Bei dem Magnet 40 in dem zweiten Teil 39 der Bremse kann es sich um einen Dauermagneten und bei dem Magneten 41 in dem ersten Teil 38 der Bremse um einen Elektromagneten handeln. Es ist auch möglich, dass der Magnet 40 in dem zweiten Teil 39 der Bremse ein Elektromagnet ist und der Magnet 41 in dem ersten Teil 38 der Bremse ein Dauermagnet ist. Auch kann sowohl der Magnet 40 in dem zweiten Teil 39 der Bremse wie der Magnet 41 in dem ersten Teil 38 der Bremse ein Elektromagnet sein.

Durch eine angelegte elektrische Spannung wirkt der Elektromagnet 40, 41 auf den Dauermagneten 41, 40 bzw. die Elektromagnete 40, 41 aufeinander, so dass sie sich anziehen, die Feder 42 als Folge davon zusammengedrückt wird, wodurch die Bremsbeläge des ersten Teils 38 der Bremse und der Rotorglocke 37 einen Abstand voneinander aufweisen und somit die Bremse keine bremsende bzw. blockierende Wirkung hat. Wird die angelegte elektrische Spannung wieder weggenommen, so stoßen sich die Magnete 40, 41 ab und die zusammengedrückte Feder 42 kann sich ausdehnen, so dass die Bremsbeläge des ersten Teils 38 und der Rotorglocke 37 in Kontakt kommen und wechselwirken und so die Bremse bremst bzw. blockiert.

## Patentansprüche

1. Antrieb für eine Transportvorrichtung, wobei der Antrieb umfasst:
- einen Außenläufer-Motor, umfassend einen Stator (3) und einen Rotor (2), und
- ein Getriebe (8), umfassend eine Welle (7) und ein Eintriebszahnrad, wobei eine doppelte Lagerung (17, 18) der Welle (7) in dem Getriebe (8) vorgesehen ist,
wobei
unter der doppelten Lagerung (17, 18) zu verstehen ist, dass entlang einer Längsachse der Welle (7) innerhalb des Getriebes (8) beabstandet zueinander zwei Lager angeordnet sind, der Rotor (2) auf der Welle (7) angeordnet ist,
die Welle (7) durchgehend von dem Eintriebszahnrad in dem Getriebe (8) bis zu dem Rotor ausgebildet ist **dadurch gekennzeichnet dass**
keine Lagerung der Welle (7) in dem Außenläufer-Motor vorgesehen ist.

2. Der Antrieb nach Anspruch 1, wobei die Transportvorrichtung ein Transportband umfasst.

3. Der Antrieb nach Anspruch 1 oder 2, wobei die doppelte Lagerung (17, 18) der Welle (7) in dem Getriebe (8) unter Verwendung von Schrägkugellagern (17, 18) vorgesehen ist.

## Claims

1. A drive for a transport device, the drive comprising:
- an external rotor motor comprising a stator (3) and a rotor (2), and
- a gear unit (8) comprising a shaft (7) and an input drive gear,
wherein a double bearing (17, 18) for the shaft (7) is provided in the gear unit (8),
wherein
double bearing (17, 18) means that two spaced-apart bearings are arranged along a longitudinal axis of the shaft (7) within the gear unit (8),
the rotor (2) is arranged on the shaft (7),
the shaft (7) is configured as a continuous component from the input gear in the gear unit (8) up to the rotor (2),
**characterised in that**
no bearing for the shaft (7) is provided in the external rotor motor.

2. The drive according to claim 1, wherein the transport device is a conveyor belt.

3. The drive according to claim 1 or 2, wherein the double bearing (17, 18) for the shaft (7) is provided in the gear unit (8) by making use of angular contact ball bearings (17, 18).

## Revendications

1. Entraînement pour une installation de transport, dans lequel l'entraînement comprend :
- un moteur à rotor externe comportant un stator (3) et un rotor (2), et
- une transmission (8) comportant un arbre (7) et un engrenage d'entraînement,
dans lequel un double palier (17, 18) de l'arbre (7) est pourvu dans la transmission (8),
dans lequel il faut entendre que le double palier (17, 18) consiste en deux paliers espacés le long d'un axe longitudinal de l'arbre (7) à l'intérieur de la transmission (8),
le rotor (2) est agencé sur l'arbre (7),
l'arbre (7) est conformé de manière traversante depuis l'engrenage d'entraînement dans la transmission (8) jusqu'au rotor,
**caractérisé en ce qu'**aucun palier de l'arbre (7) n'est pourvu dans le moteur à rotor externe.

2. Entraînement selon la revendication 1, dans lequel l'installation de transport comporte une bande transporteuse.

3. Entraînement selon la revendication 1 ou 2, dans lequel le double palier (17, 18) de l'arbre (7) est pourvu dans la transmission (8) sous forme de roulements à billes à contact oblique (17, 18).
